# FASCICULE DE BREVET EUROPEEN

(11) **EP 1 443 316 B1**
(45) Date de publication et mention de la délivrance du brevet: **28.11.2018**
(21) Numéro de dépôt: 04290229.6
(22) Date de dépôt: 29.01.2004
(51) Int. Cl.: G01G 23/02

(54) **Module de pesée pour machine d'affanchissement**
Wiegemodul für eine Frankiermaschine
Weighing module for a franking machine

(30) Priorité: 29.01.2003 FR 0300969
(43) Date de publication de la demande: 04.08.2004
(73) Titulaire: NEOPOST TECHNOLOGIES, 92220 Bagneux (FR)
(72) Inventeur: Desire, Régis, 92330 Sceaux (FR); Galtier, Olivier, 75015 Paris (FR)
(74) Mandataire: David, Alain

(56) Documents cités:
- EP-A- 0 513 463
- EP-A- 0 849 573
- US-A- 5 393 936
- US-B1- 6 331 682

## Description

### Domaine de l'invention

La présente invention se rapporte au domaine spécifique du traitement de courrier. Elle vise tout particulièrement un module de pesée dynamique d'une machine de traitement de courrier intercalé entre un module d'alimentation en articles de courrier et un module d'affranchissement de ces articles.

### Art antérieur

Les modules de pesée dynamique destinés à être mis en oeuvre avec des machines d'affranchissement sont bien connus. La demande française N°2 388 352 en illustre un exemple particulier. Ces dispositifs sont formés d'un plateau de pesée et de bandes d'entraînement pour le transport automatique des articles de courrier d'un bord à l'autre de ce plateau. Le module de pesée peut s'utiliser seul mais il est habituellement inséré dans un ensemble de traitement de courrier entre l'entrée du module d'affranchissement et la sortie du module d'alimentation d'où sont éjectées les enveloppes fermées devant être affranchies.

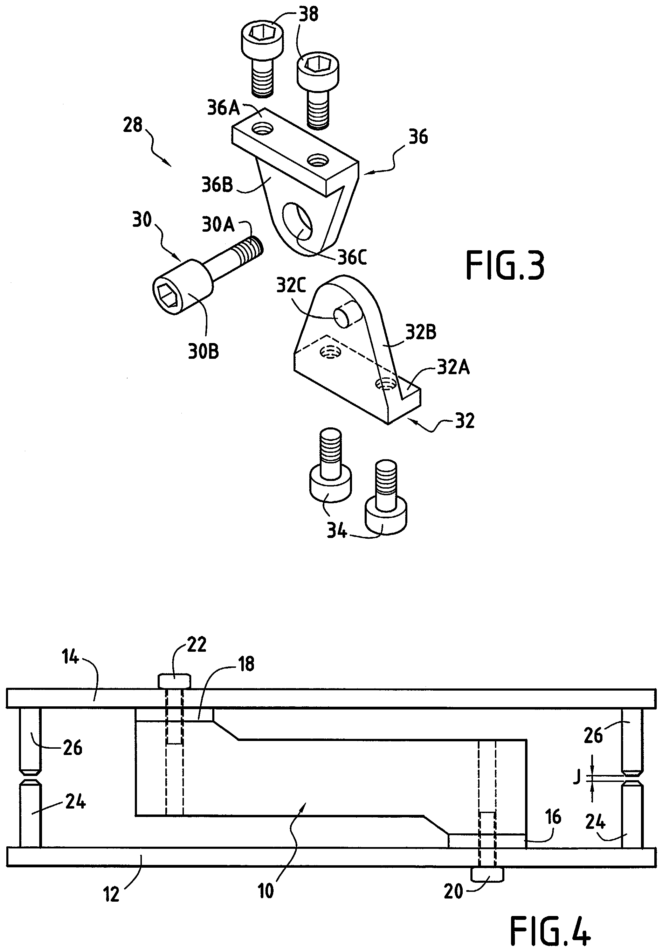

La figure 4 illustre les éléments essentiels d'un tel module de pesée. La cellule de pesée 10 utilisée dans ce type de module est un capteur de charge conventionnel comportant des éléments flexibles, des jauges de contrainte et les câblages associés et sa description n'est donc pas nécessaire. Les modèles PV2GC3 de la société HBM ou 1042 de la société TEDEA en sont des exemples classiques. Cette cellule est montée entre deux plateformes, une plateforme inférieure fixe 12 et une plateforme supérieure mobile 14, et fixée à celles-ci, via deux cales 16, 18, par des vis 20, 22 qui les traversent. Deux ensembles 24, 26 de pieds verticaux disposés aux quatre coins de ces deux plateformes s'étendent l'un vers l'autre (les pieds solidaires de la plateforme inférieure vers le haut, et les pieds solidaires de la plateforme supérieure vers le bas) pour définir entre eux un espace libre G correspondant à la charge maximale admissible par la cellule.

Lors du transport d'un module de pesée, il est d'usage d'immobiliser le capteur de pesée en maintenant les deux plateformes par un système de brides relativement complexe tout en disposant des cales entre les pieds verticaux pour rester dans une zone de contrainte du capteur acceptable, comme le montre par exemple le brevet US6331682. Or, si le module reste longtemps dans cette position avant sa livraison chez le client, la précontrainte exercée sur le capteur nécessite le plus souvent une recalibration de la cellule de pesée après débridage des plateformes. En outre, le bridage des plateformes s'effectue généralement verticalement dans le sens de la pesée, ce qui impose au moins de soulever le capot du module, éventuellement de démonter certaines pièces, parfois même de retourner la machine pour dévisser les vis assurant ce bridage.

### Objet et définition de l'invention

L'invention se propose de simplifier notablement ce système d'immobilisation de la cellule de pesée pendant son transport à l'aide d'un moyen simple et économique sans exercer de précontrainte sur le capteur, ce qui autorise une remise en route instantanée du module de pesée. Un but de l'invention est aussi d'assurer cette immobilisation avec un minimum d'opérations en usine et de permettre la libération du capteur par l'utilisateur sans intervention interne au module.

Ces buts sont atteints par un module de pesée comportant une cellule de pesée à jauges de contrainte disposée entre une plateforme inférieure reliée à un corps du module et une plateforme supérieure reliée à un plateau de pesée et des moyens d'immobilisation pour immobiliser la cellule de pesée pendant le transport du module, caractérisé en ce que lesdits moyens d'immobilisation comportent un premier moyen de retenue fixé à ladite plateforme inférieure, un second moyen de retenue fixé à ladite plateforme supérieure et un moyen unique de solidarisation pour relier fixement ledit premier moyen de retenue au dit second moyen de retenue.

Ainsi, une seule manoeuvre du moyen de solidarisation (avantageusement accessible par l'avant du module) permet de verrouiller ou déverrouiller la cellule de pesée.

Ces moyens de retenue comportent chacun une pièce formant équerre avec une partie horizontale et une partie verticale, ladite partie verticale comportant un orifice et chacune desdites équerres est fixée par ladite partie horizontale à une desdites plateformes par des vis.

Le moyen unique de solidarisation, avantageusement directement accessible par l'utilisateur sur une face avant du module, comporte un pion destiné à être introduit dans lesdits orifices desdites parties verticales desdites équerres. Il peut comporter une partie filetée destinée à coopérer avec l'un desdits orifices et une partie lisse destinée à coopérer avec l'autre desdits orifices.

### Brève description des dessins

D'autres caractéristiques et avantages de la présente invention ressortiront mieux de la description suivante, faite à titre indicatif et non limitatif, en regard des dessins annexés, sur lesquels:
- la figure 1 représente une vue en coupe des principaux constituants d'un module de pesée muni de moyens d'immobilisation de la cellule de pesée selon l'invention,
- la figure 2 est une vue de dessus selon le plan II-II de la figure 1,
- la figure 3 représente une vue en perspective des moyens d'immobilisation de la cellule de pesée de la figure 1, et
- la figure 4 illustre une partie d'un module de pesée de l'art antérieur.

### Description détaillée d'un mode préférentiel de réalisation

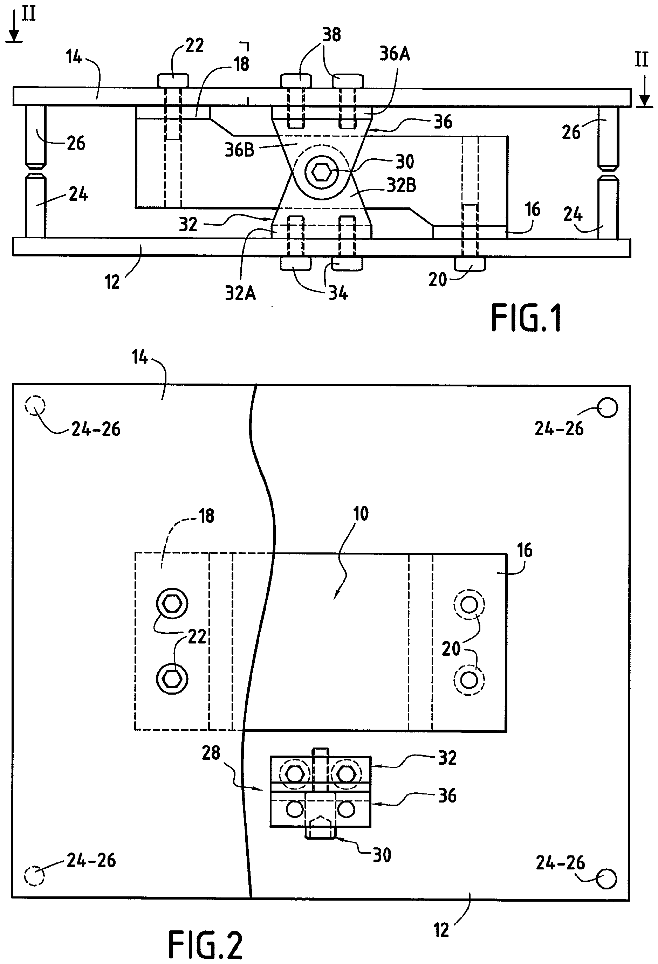

Conformément aux figures 1 à 3, un module de pesée est organisé autour d'une cellule de pesée 10 montée entre deux plateformes, une plateforme inférieure fixe 12 reliée au corps du module de pesée (non représenté) et une plateforme supérieure mobile 14 reliée au plateau de pesée proprement dit (non représenté) . Cette cellule est fixée à ces deux plateformes, via deux cales 16, 18, par des vis 20, 22 ou tout autre moyen de fixation qui traversent ces trois éléments. Des pieds verticaux disposés aux quatre coins des deux plateformes s'étendent les uns vers les autres (les uns 24 vers le haut, de la plateforme inférieure vers la plateforme supérieure, les autres 26 vers le bas de la plateforme supérieure vers la plateforme inférieure) pour définir entre eux un espace libre J correspondant à la charge maximale admissible par la cellule de pesée.

Selon l'invention, pour permettre l'immobilisation de la cellule de pesée 10 pendant son transport, il est prévu des moyens d'immobilisation 28 constitués d'un unique pion 30, d'une première plaque 32 de tôle (ou tout autre matériau de rigidité suffisante), avantageusement en forme de L pour former équerre, dont une partie horizontale 32A est solidarisée à la plateforme inférieure 12, avantageusement par des vis 34, et d'une seconde plaque de tôle en L, formant également équerre 36, dont une partie horizontale 36A est solidarisée à la plateforme supérieure 14, avantageusement par des vis 38. Les parties verticales 32B, 36B de ces deux équerres sont chacune percées d'un orifice 32C, 36C destinés à venir en regard l'un de l'autre et dans lesquels sera introduit, dans une direction perpendiculaire au sens de pesée, le seul pion 30 destiné à solidariser les deux équerres entre elles et corrélativement les deux plateformes auxquelles elles sont chacune reliées. Bien entendu, l'invention ne saurait être limitée à l'exemple illustré et tout autre moyen de solidarisation que l'unique pion 30 assurant la liaison amovible (verrouillage/déverrouillage) entre les deux moyens de retenue des plateformes que sont les équerres 32 et 36 est également envisageable.

De préférence, ce pion comporte une partie terminale filetée 30A pour être visée dans l'une des deux plaques dont l'orifice (par exemple 36C) est donc taraudé en conséquence, l'orifice de l'autre plaque (32C dans l'exemple illustré) étant lisse pour recevoir une partie de guidage 30B également lisse du pion 30. Ce second orifice peut comporter un manchon (non représenté) de largeur supérieure à celle de la plaque correspondante pour permettre un meilleur guidage du pion.

La mise en place des moyens d'immobilisation est effectuée en usine lors du montage de la cellule de pesée dans son module. Elle s'effectue très simplement, par exemple comme suit. Une fois la cellule 10 fixée entre ses deux plateformes 12, 14, il est procédé tout d'abord à la fixation d'une première équerre, par exemple la première équerre 32 qui est visée au moyen des vis 34 sur la plateforme inférieure 12, puis la seconde équerre 36 est fixée à son tour sur la plateforme supérieure 14 par les vis 38. Dans les deux cas, le serrage des vis doit être suffisant pour assurer un plaquage des équerres contre les plateformes mais cependant pas trop important pour laisser une certaine liberté de rotation des équerres. En effet, une fois ces deux opérations de serrage effectuées, il faut pouvoir introduire le pion 30 dans les orifices 32C, 36C des deux équerres qui se font face mais qui peuvent éventuellement être très faiblement désaxés. Quant le pion est en place, les vis 34, 38 peuvent alors être serrées définitivement, les équerres prenant alors leur positions définitives, parallèles l'une par rapport à l'autre. La cellule de pesée est ainsi parfaitement immobilisée dans une position dépourvue de contrainte. Avec la présente invention, il n'est pas nécessaire de disposer de cales entre les pieds ni de bridage supplémentaire des plateformes pour transporter le module de pesée de l'usine où il a été assemblé à son lieu d'utilisation par le client.

Une fois sur son site d'exploitation, la mise en marche du module de pesée est quasi instantanée, sans calibration préalable, par le simple retrait du pion 30 de son emplacement qui en libérant les deux équerres va libérer les deux plateformes 12, 14 et permettre une utilisation immédiate de la cellule de pesée 10. De préférence, la face avant du module de pesée comportera un accès direct à ce pion que l'utilisateur pourra donc ôter lui même avec un simple tournevis.

## Revendications

1. Module de pesée comportant une cellule de pesée à jauges de contrainte (10) disposée entre une plate-forme inférieure (12) reliée à un corps du module et une plate-forme supérieure (14) reliée à un plateau de pesée et des moyens d'immobilisation (28) pour immobiliser la cellule de pesée pendant le transport du module, **caractérisé en ce que** lesdits moyens d'immobilisation comportent un premier moyen de retenue (32) fixé à ladite plate-forme inférieure, un second moyen de retenue (36) fixé à ladite plate-forme supérieure et un moyen unique de solidarisation (30) pour relier fixement ledit premier moyen de retenue au dit second moyen de retenue et ainsi assurer une immobilisation de la cellule de pesée sans recourir à des cales de blocage exerçant une précontrainte sur la cellule de pesée.

2. Dispositif selon la revendication 1, **caractérisé en ce que** lesdits moyens de retenue comportent chacun une pièce formant équerre avec une partie horizontale (32A, 36A) et une partie verticale (32B, 36B), ladite partie verticale comportant un orifice (32C, 36C).

3. Dispositif selon la revendication 2, **caractérisé en ce que** chacune desdites équerres est fixée par ladite partie horizontale à une desdites plates-formes par des vis (34, 38).

4. Dispositif selon la revendication 1, **caractérisé en ce que** ledit moyen unique de solidarisation comporte un pion destiné à être introduit dans lesdits orifices desdites parties verticales desdites équerres.

5. Dispositif selon la revendication 4, **caractérisé en ce que** ledit pion comporte une partie filetée (40A) destinée à coopérer avec l'un desdits orifices et une partie lisse de guidage (40B) destinée à coopérer avec l'autre desdits orifices.

6. Dispositif selon la revendication 1, **caractérisé en ce que** ledit moyen unique de solidarisation est directement accessible par l'utilisateur sur une face avant du module.

## Patentansprüche

1. Wägemodul, umfassend eine DMS-Wägezelle (10), die zwischen einer mit einem Körper des Moduls verbundenen unteren Plattform (12) und einer mit einer Wägeplatte verbundenen oberen Plattform (14) angeordnet ist, und Festlegungsmittel (28), um die Wägezelle während des Transports des Moduls festzulegen, **dadurch gekennzeichnet, dass** die Festlegungsmittel ein erstes Haltemittel (32), das an der unteren Plattform befestigt ist, ein zweites Haltemittel (36), das an der oberen Plattform befestigt ist, und ein einziges Mittel zur festen Verbindung (30) umfassen, um das erste Haltemittel mit dem zweiten Haltemittel fest zu verbinden und um so eine Festlegung der Wägezelle sicherzustellen, ohne Blockierkeile, die auf die Wägezelle eine Vorspannung ausüben, zu verwenden.

2. Vorrichtung nach Anspruch 1, **dadurch gekennzeichnet, dass** die Haltemittel jeweils ein einen Winkel bildendes Teil mit einem horizontalen Teil (32A, 36A) und einem vertikalen Teil (32B, 36B) umfassen, wobei der vertikale Teil eine Öffnung (32C, 36C) aufweist.

3. Vorrichtung nach Anspruch 2, **dadurch gekennzeichnet, dass** ein jeder der Winkel durch den horizontalen Teil an einer der Plattformen durch Schrauben (34, 38) befestigt ist.

4. Vorrichtung nach Anspruch 1, **dadurch gekennzeichnet, dass** das einzige Mittel zur festen Verbindung einen Stift umfasst, der dazu bestimmt ist, in die Öffnungen der vertikalen Teile der Winkel eingeführt zu werden.

5. Vorrichtung nach Anspruch 4, **dadurch gekennzeichnet, dass** der Stift einen Gewindeteil (40A), der dazu bestimmt ist, mit einer der Öffnungen zusammenzuwirken, und einen glatten Führungsteil (40B), der dazu bestimmt ist, mit der anderen der Öffnungen zusammenzuwirken, umfasst.

6. Vorrichtung nach Anspruch 1, **dadurch gekennzeichnet, dass** das einzige Mittel zur festen Verbindung durch den Benutzer auf einer Vorderseite des Moduls direkt zugänglich ist.

## Claims

1. Weighing module comprising a strain gauge weighing cell (10) disposed between a lower platform (12) connected to a module body and an upper platform (14) connected to a weighing platform and immobilization means (28) for immobilizing the weighing cell during transportation of the module, **characterized in that** said immobilization means comprise a first retaining means (32) fixed to said lower platform, a second retaining means (36)) fixed to said upper platform and a single securing means (30) for fixedly connecting said first retaining means to said second retaining means and so ensuring an immobilization of the weighing call without resort to blocks applying a preload on the weighing cell.

2. Device according to claim 1, **characterized in that** said retaining means each comprises an angle bracket with a horizontal portion (32A, 36A) and a vertical portion (32B, 36B), said vertical portion having an orifice (32C, 36C) .

3. Device according to claim 2, **characterized in that** each of said angle brackets is fixed by said horizontal portion to one of said platforms by screws (34, 38).

4. Device according to claim 1, **characterized in that** said single securing means comprises a pin intended to be introduced into said orifices of said vertical portions of said angle brackets.

5. Device according to claim 4, **characterized in that** said pin comprises a threaded portion (40A) intended to cooperate with one of said orifices and a smooth guide portion (40B) intended to cooperate with the other of said orifices.

6. Device according to claim 1, **characterized in that** said single securing means is directly accessible by the user on a front face of the module.
